Europäisches Patentamt

European Patent Office

Office européen des brevets

(19)

(11) Numéro de publication: **0 199 627**
**B1**

(12) **FASCICULE DE BREVET EUROPEEN**

(45) Date de publication du fascicule du brevet:
**16.08.89**

(21) Numéro de dépôt: **86400741.4**

(22) Date de dépôt: **07.04.86**

(51) Int. Cl.⁴: **H04M 1/74,** H04M 1/76

(54) Circuit de suppression du larsen dans la zone de faux appel pour un poste téléphonique d'abonné.

(30) Priorité: **12.04.85  FR 8505564**

(43) Date de publication de la demande:
**29.10.86 Bulletin 86/44**

(45) Mention de la délivrance du brevet:
**16.08.89 Bulletin 89/33**

(84) Etats contractants désignés:
**AT BE CH DE FR GB IT LI NL SE**

(56) Documents cités:
**EP-A- 0 114 558**
**DE-A- 2 739 778**
**US-A- 3 602 648**
**US-A- 4 453 037**

(73) Titulaire: **THOMSON-CSF, 51, Esplanade du Général de Gaulle, F-92800 Puteaux(FR)**

(72) Inventeur: **Dabin, Emmanuel, THOMSON-CSF
SCPI 19, avenue de Messine, F-75008 Paris(FR)**

(74) Mandataire: **Rinuy, Santarelli, 14, avenue de la Grande Armée, F-75017 Paris(FR)**

## Description

La présente invention concerne un circuit de suppression du larsen dans la zone de faux appel pour un poste téléphonique d'abonné.

L'invention part de la constatation largement réalisée que le signal émis sur la ligne par le microphone et le signal reçu de la ligne par l'écouteur d'un combiné ou d'un poste à haut parleur peuvent donner lieu dans des conditions particulières d'emploi à un effet de larsen. Un tel effet, dénommé larsen, est un signal sonore gênant qu'il faut absolument éteindre. Une solution commune consiste à réaliser un circuit d'anti local qui en général engendre vers l'écouteur, ou le haut parleur selon le cas, un signal obtenu par soustraction du signal de ligne et du signal de microphone dans des proportions et selon des procédures bien définies EP-A 0 114 558. Un tel dispositif est particulièrement efficace dans les zones où l'impédance vue par le poste téléphonique, impédance de la ligne téléphonique plus celle du standard est bien connue, ligne téléphonique dont la longueur est comprise entre 0 km et 4 kms.

Cependant, dans l'utilisation du poste, les zones B et C du diagramme courant-tension aux bornes du poste de l'abonné correspondent à des conditions de l'accordement où l'impédance du standard augmente afin de diminuer la consommation sur la ligne téléphonique et le circuit classique d'anti local est alors largement inefficace. Ces zones sont dénommées zones de faux appel et faux appel-numérotation décimale. Dans la zone de faux appel où le problème est le plus aigü, le standard émet une tonalité indiquant à l'abonné que le poste qu'il cherche à atteindre n'est déjà en communication. L'appelé n'est pas libre. Cette tonalité peut être captée par le microphone et donner lieu à un larsen.

Afin de porter remède à ces inconvénients de l'art antérieur, la présente invention propose un circuit de suppression du larsen dans la zone de faux appel pour un poste téléphonique d'abonné du type comportant notamment une interface fournissant un signal proportionnel au courant de ligne et un signal de référence qui, dans un exemple de réalisation, correspondant à un courant de ligne de 22 mA, ces deux signaux étant fournis à un comparateur dont le signal de sortie commande un organe d'isolement du microphone, dès que le courant de ligne est inférieur au courant de seuil.

D'autres caractéristiques et avantages de la présente invention seront exposés à l'aide de la description et des figures qui sont:

- la figure 1 un diagramme courant-tension aux bornes d'un poste d'abonné;
- la figure 2 un schéma bloc de la partie transmission d'un poste téléphonique;
- la figure 3 un schéma d'un mode de réalisation d'un circuit selon l'invention.

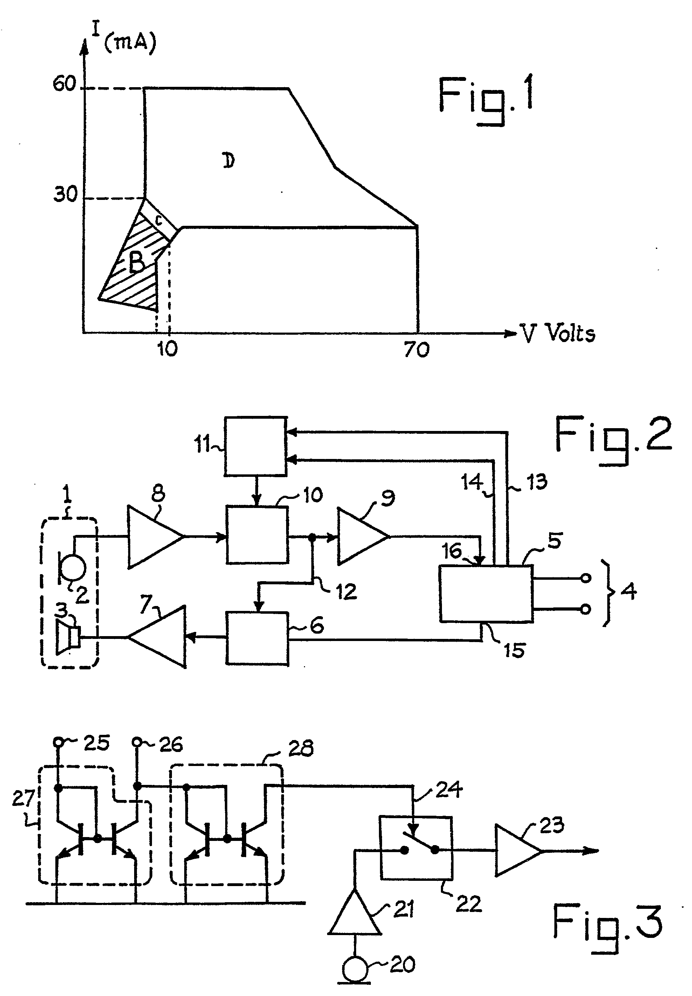

A la figure 1, on a représenté un diagramme courant-tension aux bornes d'un poste d'abonné. Un tel diagramme, appelé aussi gabarit, relève d'une norme particulière. La zone hachurée, dénommée ici zone "B", est une zone de faux appel dans laquelle le poste peut recevoir un signal provenant du standard mais n'a pas besoin d'émettre de signal. Dans la zone D le poste est en phase de conversation et doit donc émettre et recevoir mais est connecté à une impédance de ligne plus celle du standard où l'anti local empêche le larsen.

A la figure 2, on a représenté un schéma-bloc de la partie transmission d'un poste téléphonique. L'écouteur 3 et le microphone 2 peuvent être associés dans un combiné 1, un boîtier ou tout autre entourage physique qui peut, dans la zone B de faux appel, constituer un risque de larsen. Le circuit représenté comporte des bornes 4 de connexion à la ligne. Cette ligne relie le poste à un standard qui, selon les indications de la communication ou de l'abonné, place le poste devant une impédance de lignes dépendant de la fonction dans laquelle le poste est placé (conversation, numérotation, tarification, tonalités diverses, etc.).

Une interface 5 comporte en particulier une sortie 15 qui est transmise à l'écouteur 3. Cette sortie transporte des signaux adaptés correspondant à la fonction réception du poste. Cette interface 5 comporte une entrée 16 qui reçoit notamment le signal de conversation émis qu'elle adapte pour l'émettre sur la ligne. Une boucle de larsen peut se créer. Un circuit 6 d'anti local est prévu ainsi qu'il est connu. Un tel circuit comporte principalement un soustracteur du signal de la sortie 15 et d'un signal de sortie 12 du pré-amplificateur 8 du microphone 2. Un amplificateur 7 transmet le signal de sortie de l'anti local à l'écouteur 3. Un second amplificateur 9 remet un niveau convenable sur l'entrée 16 précitée.

Un tel schéma est classique mais souffrirait, dans des conditions d'emploi rude, d'un risque de larsen dans la zone B où l'anti local n'est pas adapté. Ainsi, l'invention propose t-elle un perfectionnement à la figure 2 où la sortie du pré-amplificateur 8 est connectée à l'entrée d'un organe d'isolement 10 du microphone selon une commande issue d'un comparateur 11. La sortie de cet organe d'isolement 10 est fournie d'une part à l'anti local 6, d'autre part au second amplificateur 9.

Le comparateur 11 permet d'engendrer un signal de commande de l'organe d'isolement en comparant un signal 14 proportionnel au courant de ligne à un signal 13 représentant un courant de référence. Tant que le signal 14 est plus grand que le signal 13, le comparateur 11 n'active pas l'organe d'isolation 10 qui devient transparent. Cependant, dès que le signal 14 devient plus petit que le signal 13, indiquant que l'on entre en zone "B", il active l'organe d'isolement dont la réponse est déterminée de manière à ouvrir la boucle entre le pré-amplificateur 8 et le second amplificateur 9 en atténuant fortement les signaux provenant du microphone 2. Cette action ayant pour effet de diminuer le gain total de boucle entre microphone et écouteur et de supprimer tout risque de larsen.

A la figure 3 on a représenté un mode préféré de réalisation d'un circuit selon l'invention. Un microphone 20 est connecté à un pré-amplificateur 21 et à un interrupteur commandable 22 dont la sortie est envoyée à l'anti local et à un second amplificateur 23 qui est connecté à l'interface de ligne.

L'entrée de commande 24 de l'interrupteur 22 est activée par un comparateur constitué de deux montages à miroir de courant 27 et 28. Le premier miroir de courant 27 reçoit un signal 25 proportionnel au courant ligne comme le signal 14 précédemment décrit. Le second miroir de courant 28 reçoit un signal 26 de référence correspondant à la zone B. La sortie du second miroir de courant ne délivre une tension de commande de l'interrupteur 24 que dans le cas où le courant reçu en 25 est inférieur au courant reçu en 26. Dans ce cas, l'interrupteur 22 est ouvert.

Un tel comparateur délivrant un signal variable selon la différence entre les divers signaux comparés sert dans un autre mode de réalisation à commander la courbe de réponse d'un organe d'isolement qui affaiblit alors le signal de microphone de façon à annuler le risque de larsen.

## Revendications

1. Circuit de suppression du larsen dans la zone de faux appel "B" pour un poste téléphonique d'abonné, du type comportant notamment une interface (5) de ligne, un écouteur (3) et un microphone (2) connectés à cette interface par des amplificateurs convenables (7, 9), et un anti local (6) qui reçoit un signal de ligne (15) et un signal d'écouteur amplifié (12), caractérisé en ce qu'il comporte aussi un comparateur (11) qui émet un signal d'activation d'un organe d'isolement (10) du microphone (2) en amont de l'anti local quand un signal (14) proportionnel au courant de ligne devient plus petit qu'un signal (13) représentant un courant de seuil pour éviter un larsen.

2. Dispositif selon la revendication 1, caractérisé en ce que l'organe d'isolement (10) a une réponse en zone "B" de faux appel qui affaiblit fortement le signal du microphone.

3. Dispositif selon la revendication 2, caractérisé en ce que l'organe d'isolement est un interrupteur (22) commandable électriquement.

4. Dispositif selon la revendication 1, caractérisé en ce que le comparateur (11) comporte un premier miroir de courant (27) qui reçoit un signal (25) proportionnel au courant de ligne dont la sortie est connectée à l'entrée d'un second miroir de courant (28) qui reçoit aussi un signal (26) de référence de larsen en zone B de manière à actionner l'organe d'isolement.

## Patentansprüche

1. Schaltung zur Unterdrückung des Larsen-Effekts in der Falschanrufzone "B" für einen Fernsprechteilnehmerapparat, des Typs bestehend unter anderem aus einem Leitungsinterface (5), einem Hörer (3) und einem Mikrofon (2), die an dieses Interface über geeignete Verstärker (7, g) angeschlossen sind, sowie aus einer Schaltung (6) zum Unterdrücken eines lokalen Signales, die ein Leitungssignal (15) und ein verstärktes Hörersignal (12) empfängt, dadurch gekennzeichnet, daß auch ein Komparator (11) vorgesehen ist, der ein Signal zur Aktivierung eines in Stromrichtung vor der Einrichtung zum Unterdrücken eines lokalen Signales angeordneten Isolierelementes (10) des Mikrofons (2) dann abgibt, wenn ein zum Leitungsstrom proportionales Signal (14) kleiner wird als ein einen Schwellenstrom darstellendes Signal (13) zur Vermeidung eines Larsen-Effektes.

2. Vorrichtung nach Anspruch 1, dadurch gekennzeichnet, daß das Isolierelement (10) eine Antwort in der "B"-Falschanrufzone hat, die das Signal des Mikrofons stark abschwächt.

3. Vorrichtung nach Anspruch 2, dadurch gekennzeichnet, daß das Isolierelement ein elektrisch steuerbarer Unterbrecher (22) ist.

4. Vorrichtung nach Anspruch 1, dadurch gekennzeichnet, daß der Komparator (11) einen ersten Stromspiegel (27) aufweist, der ein Signal (25) proportional zum Leitungsstrom empfängt und dessen Ausgang an den Eingang eines zweiten Stromspiegels (28) angeschlossen ist, der ebenfalls ein Larsen-Referenzsignal (26) in der "B"-Zone empfängt, so daß das Isolierelement betätigt wird.

## Claims

1. A circuit for suppression of the Larsen effect in the false call zone "B" for a subscriber's telephone set of the kind comprising in particular a line interface (5), a receiver for listening (3) and a microphone (2) connected to this interface by appropriate amplifiers (7, 9), and an anti local (6) which receives a line signal (15) and an amplified signal (12) for the receiver, characterized in that it also comprises upstream from the anti local a comparator (11) which emits a signal for activating an element (10) for isolating the microphone (2) when a signal (14) proportional to the line current becomes smaller than a signal (13) representing a threshold current, in order to avoid a Larsen effect.

2. An arrangement according to Claim 1, characterized in that the isolating element (10) has a response in the false call zone "B" which greatly weakens the signal from the microphone.

3. An arrangement according to Claim 2, characterized in that the isolating element is an electrically controllable switch (22).

4. An arrangement according to Claim 1, characterized in that the comparator (11) comprises a first current mirror (27), which receives a signal (25) proportional to the line current, the output of which is connected to the input of a second current mirror (28) which also receives a reference signal (26) for the Larsen effect in zone B in such a way as to operate the isolating element.

EP 0 199 627 B1

Fig.1

Fig.2

Fig.3